(19) Europäisches Patentamt
European Patent Office
Office européen des brevets

(11) EP 2 829 527 A1

(12) EUROPEAN PATENT APPLICATION
published in accordance with Art. 153(4) EPC

(43) Date of publication:
**28.01.2015 Bulletin 2015/05**

(21) Application number: **13764831.7**

(22) Date of filing: **18.03.2013**

(51) Int Cl.:
*C04B 38/08* (2006.01) *C04B 14/04* (2006.01)
*C04B 14/38* (2006.01) *C04B 14/42* (2006.01)
*C04B 16/02* (2006.01) *C04B 24/32* (2006.01)
*C04B 28/18* (2006.01) *C04B 35/80* (2006.01)
*C04B 38/00* (2006.01) *F16L 59/02* (2006.01)
*C04B 111/28* (2006.01)

(86) International application number:
**PCT/JP2013/057591**

(87) International publication number:
**WO 2013/141189 (26.09.2013 Gazette 2013/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.03.2012 JP 2012066788**

(71) Applicant: **Imae Industry Co., Ltd.**
**Osaka 569-0012 (JP)**

(72) Inventors:
- **IMAE, Kenji**
  **Osaka 569-0012 (JP)**
- **IMAE, Yoshihiko**
  **Osaka 569-0012 (JP)**

(74) Representative: **De Clercq, Ann G. Y. et al**
**De Clercq & Partners cvba**
**Edgard Gevaertdreef 10 a**
**9830 Sint-Martens-Latem (BE)**

# (54) HEAT INSULATOR COMPOSITION, HEAT INSULATOR USING SAME, AND METHOD FOR MANUFACTURING HEAT INSULATOR

(57) A moldable heat insulating composition, a shaped heat insulator using the composition, and a method for manufacturing the heat insulator are disclosed. The composition can provide a heat insulator with heat resistance and heat insulating ability against a thermal equipment elevating to high temperatures thanks to high heat insulating ability of silica aerogel, and attachable to complicated shaped equipments. The composition comprises (A) silica aerogel having a porosity of 60 % or more, (B) starting material liquid for forming a ceramic crystal via hydrothermal reaction (starting material liquid for hydrothermal synthesis), (C) surfactant, and (D) reinforcing fiber.

[Fig. 4]

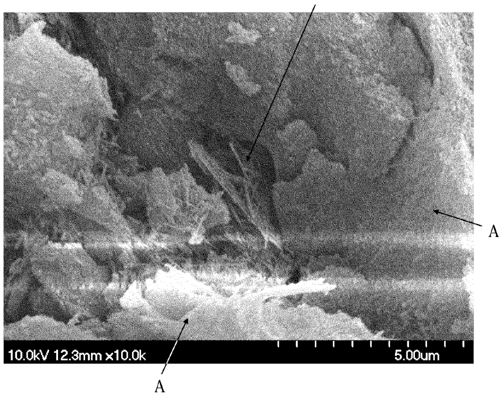


EP 2 829 527 A1

## Description

### TECHNICAL FIELD

The present invention relates to a moldable heat insulating composition, a novel shaped heat insulator using the composition, and a method for manufacturing thereof. In particular, the present invention relates to a heat insulator with fire resistance and heat resistance against 400 °C or more, applicable for thermal insulation against a thermal equipment elevating up to 600 °C or more such as reformer of fuel cell, as well as applicable for thermal insulation against a thermal equipment with curved or bumpy surface. Furthermore, the present invention also relates to a method for manufacturing the heat insulator, and the heat insulating composition as a molding material for the heat insulator.

### BACKGROUND ART

Glass wool, which is typically used for a heat insulator, cannot become a shaped article by itself. And compression for making glass wool thinner damages the excellent heat insulating property inherent in the glass wool, which is another drawback. Recently, a porous aerogel having porosity of 60 % or more has attracted attention as an alternative heat insulator for glass wool.

The aerogel particles or powder are usually filled and dispersed in sheet-like bulk fiber or non-woven fabric sheet to produce a sheet shaped heat insulator for easy handling. Such a sheet shaped heat insulator, for example "Pyrogel (registered trademark)", is sold and available on the market (URL:http://www.aerogel.com/markets/industrial-hot-products.html).

The aerogel particles or powder simply filled or dispersed in such sheet shaped heat insulator scatter easily. For solving the problem, the sheet-like bulk fiber containing aerogel particles is usually covered with porous layers and used, as suggested in JP2009-299893A (patent document 1).

A problem of scattering of aerogel microparticles has been solved in the heat insulator disclosed in the patent document 1, where the aerogel particles are shielded with the porous covering layer. However, the resulting heat insulator restricts the sites to be attached to or be set on due to the sheet- or plate- shape thereof. In order to apply such a sheet or plate shaped heat insulator to a complicated shaped thermal equipment, the sheet- or plate- shaped heat insulator has to be formed into an intended shape by combining some sheets, or cutting and punching. Furthermore, it is difficult to apply the sheet- or plate- shaped heat insulator to a hemispherical or spherical shaped thermal equipment or the thermal equipment having bumpy surfaces.

As a heat insulating material formable a shape other than sheet, for instance, JP4361602B (patent document 2) suggests a composite material containing from 10 to 95 vol% of aerogel, and an inorganic binder including cement, lime and/or gypsum. Since the composite material is mixed with water to exhibit plasticity due to the hydraulic materials used as an inorganic binder, the composite material can be molded into a desired shape other than sheet. Thus the moldable composite material is used for a construction material required for heat insulating ability.

[patent document 1] JP2009-299893A
[patent document 2] JP4361602B

[non-patent literature 1] http://www.aerogel.com/markets/industrial-hot-products.html

### DISCLOSURE OF THE INVENTION

### TECHNICAL PROBLEM TO BE SOLVED THE INVENTION

The hydraulic materials contained in the composite material disclosed in the patent document 2, that is, cement, lime and/or gypsum are usually poor in heat insulating property. For example, in order to achieve to the thermal insulation performance equal to that of glass wool in terms of thermal conductivity, the heat insulator made from the composite material should have about 30 times the thickness of heat insulator made from glass wool.

Decrease of content of hydraulic material in the composite material makes possible to suppress lowering heat insulating ability of the composite material. Unfortunately, if a composite material contains hydraulic material enough for ensuring moldability, the resulting composite material cannot become an alternative of glass wool known as a typical heat insulator for smaller and/or thinner equipment in demand.

In addition, since a hydraulic material such as cement, lime, or gypsum is poor in heat resistance comparing to glass wool or aerogel, the hydraulic material cannot be used for a heat insulator for a thermal equipment such as fuel cell elevating a temperature of 400 °C or more.

The present invention has been made under the above-mentioned condition. The object of the present invention is to provide a heat insulating composition capable of serving a heat insulator having an excellent heat resistance and heat insulating property sufficient for applicable to thermal equipment used at high temperatures thanks to superior heat insulating property of aerogel, and moldable into any shapes attachable to a complicated shaped equipment. Also, the object is to provide a heat insulator using the heat insulating composition and a method for manufacturing the heat insulator.

## MEANS FOR SOLVING THE PROBLEMS

A heat insulating composition of the present invention is a moldable heat insulating composition comprising (A) silica aerogel having a porosity of 60 % or more, (B) starting material liquid for forming a ceramic crystal via hydrothermal reaction (hereinafter referred to as "starting material liquid for hydrothermal synthesis"), (C) surfactant, and (D) reinforcing fiber.

Another aspect of the invention includes a method of manufacturing a shaped heat insulator using the heat insulating composition of the invention.

The method for manufacturing a heat insulator comprises preparing a primary shaped article by charging a heat insulating composition of the invention into a mold having a cavity with an intended shape and removing water from the charged composition; and heating and pressing the primary shaped article to synthesize or grow a ceramic crystal from (B) starting material liquid for hydrothermal synthesis.

Further another aspect of the invention includes a shaped heat insulator using a heat insulating composition of the invention. The heat insulator of the invention is a shaped heat insulator comprising silica aerogel having a porosity of 60 % or more, ceramic crystal, and reinforcing fiber.

## EFFECT OF THE INVENTION

A heat insulating composition of the present invention is slurry-like material having fluidity and moldable into any shape attachable to a variety of equipments having various shapes. In addition, a shaped heat insulator is highly porous based on silica aerogel, and therefore, the shaped heat insulator is lightweight and excellent in heat insulating property, fire resistance, and heat resistance.

## BRIEF DESCRIPTION OF THE DRAWINGS

Fig. 1 is a partial sectional view for explaining one embodiment of the manufacturing method of the present invention.
Fig. 2 is a sectional view for explaining another embodiment of the manufacturing method of the present invention.
Fig. 3 is a figure for explaining another embodiment of the manufacturing method of the present invention.
Fig. 4 is an electron micrograph (x10000 magnification) of an unfired heat insulator of the composition prepared in example No. 10.
Fig. 5 is a figure for explaining a measuring method employed in the Example.
Fig. 6 is a figure for explaining a measuring method employed in the Example.
Fig. 7 is a figure for explaining a measuring method employed in the Example.

## MODE FOR CARRYING OUT OF THE INVENTION

[Heat insulating composition]

(1) Composition

A moldable heat insulating composition of the present invention comprises

(A) silica aerogel having a porosity of 60 % or more,
(B) a starting material liquid for forming a ceramic crystal via hydrothermal reaction (hereinafter referred to as "starting material liquid for hydrothermal synthesis"),
(C) surfactant, and
(D) reinforcing fiber.

In a preferred embodiment, the heat insulating composition further comprises (E) infrared interacting agent,

besides the above-mentioned components (A), (B), (C), and (D).
These components will be described below.

(A) Silica aerogel

According to the invention, silica aerogel is a gel particle having a porosity of 60 vol% or more, preferably 80 vol% or more, more preferably 90 vol% or more. 90 % or more of silica aerogel particles contained in the composition have a particle diameter of 50 nm to 5 mm, preferably 1 μm to 5 mm, more preferably 5 μm to 1 mm, furthermore preferably 10 μm to 500 μm. Silica aerogel having a particle diameter of 500 μm or less makes a contribution to improving a mechanical strength of a shaped heat insulator of the composition probably because of excellent dispersibility of the composition.
Silica aerogel having such a particle diameter may be obtained from the market, or by appropriately crushing silica aerogel having a larger particle diameter.
The silica aerogel used in the invention has nanosized pores ranging from about 10 to 50 nm, and the pores are filled with air. Accordingly, the silica aerogel is remarkably lightweight with a density of 0.1 to 0.4 g/cm$^3$ or so.
A preferable silica aerogel is hydrophobic aerogel with hydrophobic groups on the surface thereof. Specifically, the hydrophobic silica aerogel is resulted from binding a silyl group with three substituents, represented by the formula below. In the formula, $R^1$, $R^2$, and $R^3$ may be identical or different, and each of $R^1$, $R^2$, and $R^3$ is alkyl group having from 1 to 18 carbon atoms or allyl group having 6 to 18 carbon atoms, and is preferably selected from methyl, ethyl, cyclohexyl, and phenyl.

[formula 1]

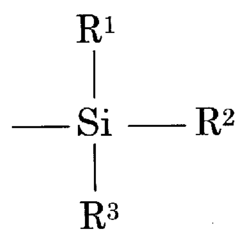

Since the pores having a few tens nm in diameter inhibiting mean free path increase with higher porosity, the thermal conductivity of aerogel becomes smaller. The silica aerogel particle has hydrophobic groups on its surface, and therefore can prohibit water intrusion into pores when dispersed in an aqueous medium. Accordingly, excellent heat insulating property is exhibited in a composition state as well as a shaped heat insulator due to a high porosity inherent in the silica aerogel.
The silica aerogel cannot be solely dispersed homogenously in the aqueous medium due to hydrophobic groups on the silica aerogel, but can be dispersed in the aqueous medium in the presence of surfactant.

(B) Starting material liquid for forming a ceramic crystal via hydrothermal reaction (starting material liquid for hydrothermal synthesis)

A starting material liquid for hydrothermal synthesis is a solution or suspension of solving or dispersing starting material for producable ceramic crystal or crystal growth via hydrothermal reaction, in the aqueous medium.
A formed ceramic crystal may be any one crystallized via hydrothermal reaction, for instance, silicate such as calcium silicate hydrate, and sodium silicate; titanate such as barium titanate; alumina hydrate, hydroxyapatite, and so on. In particular, calcium silicate hydrate can form or grow a crystal without affecting a chemical structure including porous structure of silica aerogel. Additionally, calcium silicate hydrate is advantageous from the viewpoint of easily getting starting materials therefor. Furthermore, since calcium silicate hydrate has excellent heat resistance and heat insulating property, calcium silicate hydrate can act as a partial alternative heat insulator of silica aerogel.
A starting material for the hydrothermal synthesis is appropriately selected depending on a desirous ceramic crystal. For example, in the case of forming calcium silicate hydrate crystal, quicklime or slacked lime, and silicic acid or silica sand as a raw material thereof are used as a starting material for hydrothermal synthesis. In the case of forming sodium silicate, silicon dioxide and either sodium carbonate or sodium hydroxide may be used as a starting material for hydrothermal synthesis. In the case of forming barium titanate, barium source such as barium carbonate, and titanium

source such as titanium dioxide may be used as a starting material for hydrothermal synthesis. A starting material for hydrothermal synthesis is a mixture of a few compounds. The mixing ratio is appropriately determined depending on the intended crystal types.

The intended crystal type may be acicular, fibrous, strip, layered, plate-like, or particulate or the like, preferably, fibrous or acicular crystal. Fibrous or acicular crystal affects slightly on the porous structure of the aerogel, and tends to exhibit excellent bonding strength probably due to ceramic crystal intertwining each other, and thereby improving a mechanical strength of a shaped product. Type or shape of crystal may be controlled by properly selecting composition of starting material for hydrothermal synthesis, condition of hydrothermal reaction described below, and so on.

Types of calcium silicate hydrate crystal include wollastonite such as xonotlite crystal ($6CaO \cdot 6SiO_2 \cdot H_2O$), nekoite ($Ca_3(Si_6O_{15}) \cdot O8H_2O$), okenite ($Ca_3(Si_6O_{15}) \cdot 6H_2O$), foshagite ($Ca_4(Si_3O_9)(OH)_2$); tobermorite such as 11 Å tobermorite ($Ca_5 \cdot (Si_6O_{18}H_2) \cdot 4H_2O$), 9 Å tobermorite ($Ca_5 \cdot (Si_6O_{18}H_2)$; gyrolite such as truscottite ($Ca_{14} \cdot (Si_8O_{20}) \cdot (Si_{16}O_{38})_8 \cdot 2H_2O$). Among them, wollastonite of fibrous crystal, and tobermorite of strip are preferable, wollastonite is more preferable, xonotlite crystal is further more preferable.

In the case that a starting material for calcium silicate is used as a starting material for hydrothermal synthesis, a mixing ratio of quicklime or slaked lime and silicic acid or silica sand as a starting material thereof is preferably determined according to the content ratio of Ca and Si in calcium silicate hydrate crystal to be formed. In the case of forming acicular or fibrous crystal, particularly xonotlite crystal ($6CaO \cdot 6SiO_2 \cdot H_2O$), slaked lime serving Ca and silica stone serving Si are mixed at preferably 1:1 ratio.

(B) starting material liquid for hydrothermal synthesis is suspension where the above-mentioned starting material for hydrothermal synthesis is solved, suspended or dispersed in an aqueous medium. Examples of the aqueous medium include water, mixed liquid of water and lower alcohol, and so on. Water is preferable in view of environment, handleability, and workability. The solid content of the starting material liquid for hydrothermal synthesis, i.e., the concentration of the starting material for hydrothermal synthesis is selected from the range of usually 1 to 30 % by mass, preferably 1 to 10 % by mass, but not limited thereto.

Besides the above-mentioned starting material for hydrothermal synthesis, (B) starting material liquid for hydrothermal synthesis may contain a seed crystal or grown crystal.

A mixing mass ratio of (A) silica aerogel and (B) starting material liquid for hydrothermal synthesis can be selected from the range without affecting moldability, normally from the range of 8:2 to 3:7, preferably 7:3 to 5:5, in terms of content mass ratio (A:B solid content) of (A) silica aerogel and the solid content of (B) starting material liquid for hydrothermal synthesis. The content mass ratio is appropriately selected from the range according to the property required, starting material for hydrothermal synthesis used, and so on. Silica aerogel is non-curable and non-adhesive intrinsically. In order to maintain the shape of the shaped heat insulator, the ratio (B/(A+B)) of the content of (B) starting material liquid for hydrothermal synthesis to the total content of (A) silica aerogel and solid content of (B) starting material liquid for hydrothermal synthesis needs about 20 % by mass or more, preferably 30 % by mass or more for securing binding strength of silica aerogel in the shaped article. On the other hand, although a ceramic crystal made from starting material for hydrothermal synthesis has intrinsically heat insulating property to some extent, the ceramic crystal is usually inferior to highly porous silica aerogel in heat insulating property. Accordingly, the content ratio (B/(A+B)) is preferably about 70 % by mass or less, more preferably 60 % by mass or less, further more preferably 50 % by mass or less, depending on a performance required to the heat insulator.

(C) Surfactant

A surfactant is contained for the purpose of stable dispersion of silica aerogel in aqueous medium, and improvement of miscibility of starting material for hydrothermal synthesis in the (B) starting material liquid for hydrothermal synthesis.

Silica aerogel particle used in the invention cannot be homogeneously dispersed in the aqueous medium by itself due to the hydrophobic surface. However, silica aerogel particles can be homogenously dispersed in starting material liquid for hydrothermal synthesis in the presence of surfactant.

A surfactant dissolvable in the aqueous medium (preferably water) contained in the composition is preferably used based on the role of the surfactant. Cationic surfactant, anionic surfactant, nonionic surfactant, and zwitterionic surfactant may be used, and nonionic surfactant is preferably used, but not limited thereto.

Taking into consideration the dissolubility in the aqueous medium, the nonionic surfactant having polypropylene glycol block for a hydrophobic portion and ethylene oxide block for a hydrophilic portion, in particular, the nonionic surfactant having 20 to 60 % by mass of polyoxyethylene block in the surfactant molecule, is preferably used. The preferable surfactant has a weight-average molecular weight of about 2000 to about 7000.

The surfactant is contained in the content of preferably 0.1 % by mass to 20 % by mass, more preferably 0.3 % by mass to 10 % by mass with respect to the content of silica aerogel. Smaller content of the surfactant makes difficulty in homogeneous dispersion of silica aerogel.

(D) Reinforcing fiber

Addition of reinforcing fiber to the composition of the present invention can improve moldability of the composition and enhance the mechanical strength of a shaped heat insulator.
Examples of reinforcing fiber used in the invention include a ceramic fiber such as glass fiber, silica fiber, and alumina fiber; an inorganic fiber such as carbon fiber; an organic fiber excellent in heat resistance such as aramid fiber, pulp fiber, and so on.
The fiber contained in the composition has no limitation about its size, but preferably has a diameter of 2 to 20 μm (more preferably 5 to 15 μm), and a fiber length of 2 to 20 mm (more preferably 3 to 15 mm).
Such fiber may be contained up to 10 parts by mass, preferably 1 part by mass to 5 parts by weight, with respect to 100 parts by mass of the total content of (A) silica aerogel and solid content of the (B) starting material liquid for hydrothermal synthesis. The more content of the reinforcing fiber, the more improved the moldability of the composition and the more increased the mechanical strength of a resulting shaped article, but the lower the heat insulating property.

(E) infrared interacting agent

An infrared interacting agent is an agent capable of absorbing or reflecting infrared. Examples of the infrared interacting agent includes silicon carbide, titanium oxide, carbon black, zircon, and $(Fe,Mn)(Fe,Mn)_2O_4$:CuO (Aspen, "AX9912"). These may be used alone or in combination of two or more.
The presence of such infrared interacting agent can absorb the thermal energy of heat source or reduce thermal energy by repeating the reflection of thermal energy in the heat insulator, and thereby enhancing the heat insulating property. Types of infrared interacting agent used in the invention are appropriately selected according to use of the heat insulator, in particular, a temperature of heat source to be insulated thermally. For instance, carbon material such as carbon black is oxidized and deteriorated under the condition of 150 °C or more, and therefore the carbon material is applied to thermal insulation of 150 °C or less. Inorganic compounds such as silicon carbide and titanium oxide are effective in reducing radiation of heat energy, and therefore the inorganic compounds are preferably applied to thermal insulation against high temperatures of 200 °C or more.
The content of the infrared interacting agent is in the range over 0 % by mass to 50 % by mass, preferably from 5 to 40 % by mass, more preferably from 10 to 35 % by mass based on the total mass of the composition (i.e. total mass of the components (A), (B), (C), (D), and (E)). If the content exceeds 50 % by mass, the content of silica aerogel relatively decreases, and the effect of improving heat insulating property is lowered, causing to raise the cost.

(2) Preparation of the composition

The composition of the invention is prepared by blending the above-mentioned components at a desired ratio. The blending method or the order of blending is not particularly limited, but the following preparation is preferred, taking into consideration the hydrophobic surface of the silica aerogel, and difficulty in homogenous blending of (A) silica aerogel and (B) starting material liquid for hydrothermal synthesis in the absence of the surfactant. The preparation method includes: a) a method of adding surfactant to starting material liquid for hydrothermal synthesis, and admixing silica aerogel to the mixture; b) a method of preparing silica aerogel dispersion by dispersing silica aerogel in the aqueous medium in the absence of surfactant, and mixing the prepared dispersion and starting material liquid for hydrothermal synthesis; or the like method. Admixing may be carried out by adding a predetermined amount at a time and mixing, as well as by adding a small amount little by little, but the latter is preferable. Also, the composition may be obtained by preparing a composition having a high solid content, and after then, diluting the prepared composition with the aqueous medium to adjust the content of the desired solid material.
A reinforcing fiber may be contained by i) mixing reinforcing fiber with (B) starting material liquid for hydrothermal synthesis beforehand; ii) employing silica aerogel dispersion medium containing reinforcing fiber; iii) adding reinforcing fiber to the mixed liquid of silica aerogel dispersion medium and (B) starting material liquid for hydrothermal synthesis; iv) admixing reinforcing fiber together with silica aerogel dispersion medium or starting material liquid for hydrothermal synthesis; v) adding some of predetermined amount of the fiber to (B) starting material liquid for hydrothermal synthesis and/or silica aerogel dispersion medium, and adding remained amount of the reinforcing fiber at the time of mixing or after mixing (B) starting material liquid for hydrothermal synthesis with silica aerogel dispersion medium.
Admixing operation is preferably carried out with stirring the solution, or under ultrasonic vibration.
In the case that the infrared interacting agent is contained in the composition of the invention, the infrared interacting agent may be blended together with reinforcing fiber, or admixed according to one of the methods i) - v), in which the reinforcing fiber is replaced by the infrared interacting agent.
The composition thus obtained is aqueous medium slurry in which (A) silica aerogel, (B) starting material liquid for hydrothermal synthesis, and reinforcing fiber added according to the necessity, are dispersed homogeneously, and

is usable for a molding material. A composition having a high solid content may be diluted by adding an aqueous medium at the scene of molding.

[Method for manufacturing a heat insulator]

The method for manufacturing a heat insulator of the present invention comprises preparing a primary shaped article by charging a moldable heat insulating composition into a mold having a cavity with an intended shape and removing water from the charged composition, and heating and pressing the primary shaped article to synthesize or grow a ceramic crystal from (B) starting material liquid for hydrothermal synthesis.

The primary shaped article is preferably formed by charging a heat insulating composition in a mold with an opening for draining water.

The method for manufacturing a heat insulator of the invention using the above-mentioned heat insulating composition will be described with referring to figures. The forming molds shown in figures are only illustrative, and the method of the invention is not construed as being limited thereto.

(1) Process for preparing a primary shaped article

A process for preparing a primary shaped article from the prepared heat insulating composition is conducted by charging a slurry-like heat insulating composition into a mold having a cavity with a shape to be formed, and draining extra water from the charged composition. For example, the process may be performed by charging a heat insulating composition into the forming mold with many draining holes for draining water, and pressing the charged composition. For instance, in an example shown in Fig. 1(a), a slurry-like heat insulating composition is poured into the cavity 2 of the forming mold 1, and water is exhausted through the drain holes 3a of the draining mesh 3 on the bottom surface. Next, a pressing body fit with the cavity 2 is forced to insert in the cavity 2 toward the direction indicated by the white arrow in Fig. 1(b), and thereby pressing the heat insulating composition 10 charged in the cavity 2. Water is removed from the charged composition while pressing, resulting in producing a primary shaped article having a shape identical to the cavity 2. The obtained primary shaped article is a clayey one because of the removal of the aqueous medium from the heat insulating composition constituting the primary shaped article.

Draining during pressing may be performed through not only the bottom surface of the forming mold shown in Fig. 1, but also through plural openings of the forming mold. In another embodiment shown in Fig. 2, the pressing body 5 having plural ventilation holes 5a for draining is used, water exhausting by pressing is performed through both draining mesh 3 at the bottom surface of the mold 1 and ventilation holes 5a of the pressing body 5, to attain a primary shaped article. In Figs 1 and 2, outline arrow indicates the direction of pressing and black arrow indicates the direction of draining.

A mold having a cavity with a shape of an intended heat insulator is employed as a forming mold. The cylindrical cavity is used in the mold shown in Figs 1 and 2, but not limited thereto. In the case of the mold 1’ in Fig 3, the cavity 2’ of the mold 1’ is U-shaped in cross section and enables to serve a primary shaped article having U-shape in cross section. A mesh 3’ for draining constitutes the bottom of the mold 1’.

(2) Heating and pressing process

Thus prepared primary shaped article is heated and pressed. The heating and pressing process is a process for synthesizing and/or growing ceramic crystal from the starting material for hydrothermal synthesis, and normally, is performed in an autoclave. Accordingly, the conditions such as heating temperature, heating time, and pressure for pressing are appropriately established according to the desired crystal type.

For example, in the case of using a starting material for calcium silicate hydrate, the primary shaped article is heated and pressed at a range of 3 to 20 atm (preferably 8 to 15 atm) under a temperature of 100 to 250 °C (preferably 150 to 200 °C) for 1 to 10 hours, but not limited thereto. In the case of growing xonotlite crystal to fibrous, the xonotlite crystal is preferably heated and pressed at a range of 8 to 15 atm under a temperature of 150 to 250 °C, for 1 to 8 hours.

Hydrothermal reaction proceeds on the surfaces of silica aerogel and/or reinforcing fiber, and the synthesized ceramic is crystallized and grown on a surface of silica aerogel particle, or a gap between silica aerogel particles, or between silica aerogel particle and filler, or the like. A formed ceramic crystal has a size depending on a condition of heating and pressing process, a composition of the starting material for hydrothermal synthesis, type of the formed crystal, and so on. Normally, a formed ceramic crystal powder has a diameter in the case of particle or major axis or length in the case of acicular or fibrous crystal, ranging from 1 to 50 $\mu$m. Thus formed ceramic crystal can act as a binder for the aerogel particles and secure the shape of the molded article. A highly porous silica aerogel is not adhesive, and cannot assist to retain a shape formed by molding, as a result, the formed shape of the molded article is destructed by press. On the other hand, the starting material for hydrothermal synthesis is crystallized in the heating and pressing process, and the formed crystal powder is bound each other, and moreover, silica aerogel is bound to reinforcing fiber

during the heating and pressing process. Accordingly, the formed crystal powder is supposed to act as a binder in a heat insulator formed from the composition of the present invention. As a result, the formed crystal is supposed to be free from destruction of the shape heat insulator by compression.

A primary shaped article may be further subjected to drying, if necessary. The drying may be performed by merely leaving in air or hot air, or by placing in oven. In addition, firing at 400 °C or more is preferably carried out, because the firing can enhance heat resistance, heat insulating property, and mechanical strength of the shaped article.

Since a heat insulator of the present invention is thus produced, it is possible to attain any shape including sheet-like, plate-like, cup shaped, cylindrical, prism shaped, and bulk, by using a forming mold having a cavity with an intended shape. Even a heat insulator having a through hole or an bumpy surface can be produced. Accordingly, the heat insulator having a through hole can be formed without piercing, which is free from the risk of suffering damage with post-processing.

[Heat insulator]

The heat insulator of the present invention is a shaped heat insulator comprising a silica aerogel with 60 % or more of porosity, ceramic crystal, and reinforcing fiber. The heat insulator may further comprise an infrared interacting agent.

A heat insulator having above-mentioned structure can be produced with use of a heat insulating composition of the invention, and is manufactured by the manufacturing method of the invention, but any other method may be employed. The ceramic crystal is formed from a starting material for hydrothermal synthesis in the heat insulating composition, and has normally 1 to 50 $\mu$m in diameter in the case of particle, or in major axis or length in the case of fibrous or acicular crystal. A content ratio of silica aerogel and ceramic crystal is similar to that of the heat insulating composition as a raw material thereof.

The heat insulating composition or raw material of the heat insulator contains a surfactant. However, part or whole of the surfactant is probably burn out in the process of heating and pressing for the ceramic crystal formation, because the surfactant is normally an organic compound.

A highly porous structure is mostly secured in the heat insulator of the invention, which can ensure an excellent heat insulating property inherent in silica aerogel.

The ceramic crystal makes a role of holding silica aerogel particles as follows. A slurry or suspension dispersing silica aerogel alone or in combination with reinforcing fiber in an aqueous medium cannot serve a molded article securing a shape, even if the slurry or suspension is charged in a forming mold and thereafter heated and pressed, because the silica aerogel does not have bindability. On the other hand, according to the invention, the ceramic crystal is formed surrounding around the silica aerogel and the formed ceramic crystals are bound each other, and thereby providing a molded article having a shape secured. A starting material for ceramic by hydrothermal synthesis can produce ceramic crystal powder under the condition of heating and pressing without affecting a particle structure of silica aerogel. The resulting ceramic crystal may exist between silica aerogel particles. In this way, the ceramic crystal acts as a binder for silica aerogel particles.

Calcium silicate hydrate crystal preferably used as a ceramic crystal, in particular, xonotlite crystal, has a heat insulating property as much as about 40 mW/m·K at 0 °C, and about 80 mW/m·K at 400 °C. Accordingly, even if the content of the calcium silicate hydrate to the total amount of silica aerogel and calcium silicate is 20 mass % or more, reduction of the heat insulating property inherent in silica aerogel can be suppressed. On the other hand, since acicular or fibrous crystal such as xonotlite crystal is easy to intertwine with silica aerogel particle or reinforcing fiber, comparing to a plate-like or spherical crystal, even small amount of the acicular or fibrous crystal can give an excellent bonding strength. This means that it is possible to increase the contents of reinforcing fiber and/or silica aerogel in the heat insulator. The resulting heat insulator exhibits an improved strength and thermal insulating performance thereof.

The heat insulator having a structure mentioned above, has an excellent heat insulating property, heat resistance and fire resistance based on the property of the silica aerogel. Specifically, the heat insulator is resist against heat as high as 200 °C or more, 400 °C or more, or 600 °C or more, and attains to have a thermal conductivity as low as 25 mW/m·K or less, preferably 20 mW/m·K or less at 25 °C. Moreover, the heat insulator can retain a heat insulating property as low as 30 mW/m·K or less, preferably 28 mW/m·K or less at 25 °C, even after firing treatment at a temperature of 400 °C or more, or after exposure for long hours at a temperature of 400 °C or more.

Since the silica aerogel particle still has the high porosity in the heat insulator, the above-mentioned excellent heat insulating property can be retained. In addition, the heat insulator is lightweight due to the high porosity of the silica aerogel, resulting in suppressing the increase of the weight of the thermal equipment covered therewith.

A coating may be applied to the surface of the shaped heat insulator of the invention. The coat can inhibit scattering of silica aerogel powder unadhered on to the surface of the heat insulator, or prevent silica aerogel powder from falling from the heat insulator when the heat insulator surface is contacted with or rubbed with the other member.

The heat insulator thus produced has a flexural strength of 3 $N/cm^2$ or more, preferably 5 $N/cm^2$ or more, more

preferably 7 $N/cm^2$ or more, which are measured according to JIS A9510. Such flexural strength is lower than that of calcium silicate board or gypsum board, however, it is not disadvantage. Because the heat insulator of the invention can be formed into a desired final shape, and does not require post-processing such as punching and cutting, which causes a serious damage. The heat insulator having 3 $N/cm^2$ or more of flexural strength is enough to be free from destruction when attached to a device, transported, or carried.

[Multilayered heat insulator]

The heat insulator of the invention is not limited to a single layer structure. Heat insulating layers each of which is made of different heat insulating compositions from each other may be combined, and the resultant multilayered heat insulator is also included in the inventive heat insulator. The content of silica aerogel, ceramic crystal, or reinforcing fiber may be different between the heat insulating layers constituting a multilayered heat insulator. According to the invention, a preferable multilayered heat insulator comprises a first heat insulating layer without an infrared interacting agent and a second heat insulating layer containing an infrared interacting agent.

The combination of the first heat insulating layer (α layer) without infrared interacting agent and the second heat insulating layer (ß layer) containing infrared interacting agent includes two-layer structure of α/ß as well as three-layer structure of α/ß/α or ß/α/ß, and so on. In the case that the combination contains two or more of ß layers, layers containing different infrared interacting agents, e.g. layers ß1 and ß2, may be combined. Accordingly, three-layer structure of ß1/α/ß2 may be employed.

Since the heat insulating layer (α layer) without infrared interacting agent is excellent in heat radiation, the α layer is preferably positioned on a side of lower temperature. On the contrary, the layer (ß layer) containing infrared interacting agent is supposed to reduce thermal energy by absorbing thermal energy in itself or reflecting the thermal energy in the layer. Accordingly, the ß layer is preferably positioned on a side of heat source.

[Application]

The heat insulator of the invention is excellent in heat insulating property as well as heat resistance, fire resistance, and flame-retardant, and therefore, may be used for heat insulating on the portion against high temperatures, in particular, preferably used for thermal insulation against thermal equipment at high temperatures. Also, a variety shape of heat insulator is obtained by choosing an appropriate cavity for the forming mold. Accordingly, the shaped heat insulator is useful for a heat insulator applicable to such a position or device to be filled with intangible heat insulator like glass wool as only heat insulating technique in the past.

Typically, the heat insulator may be used for attaching to a thermal equipment having 600 °C or more such as a reformer of fuel cell, or to high temperature portion of constructing member or home appliance, alternatively used as a general thermal insulating board required for a lower thermal conductivity than that of calcium silicate board.

In the case of a multilayered heat insulator in a combination of heat insulating layer (ß layer) containing infrared interacting agent and heat insulating layer (α layer) without infrared interacting agent, the multilayered heat insulator is preferably used such that the ß layer is disposed on the heat source side. For instance, in the case that a multilayered heat insulator is attached to a cylindrical or prism shaped thermal equipment, the cylindrical or prism shaped multilayered heat insulator having ß layer on internal surface and α layer on outer surface is preferably used so as to dispose the ß layer and α layer on the heat source side and the side exposed to room temperature atmosphere respectively.

[Example]

[Preparation of heat insulating compositions: evaluation a relationship between component ratio and thermal insulation performance]

Heat insulating composition Nos. 1-8:

The "silica aerogel A" used for (A) silica aerogel was prepared by crushing silica aerogel powder ("silica aerogel A'") having a particle diameter of 1.2 to 4.0 mm available from Cabot Corporation with mixer. The silica aerogel A has a particle-size of 10 to 400 μm, measured by Particle Size Distribution Analyzer LA-920 (HORIBA, Ltd., dispersion medium: ethanol).

A starting material liquid for calcium silicate having a solid content of about 5 % by mass, which is a mixture of quicklime (CaO)) aqueous solution and silica ($SiO_2$) aqueous solution at a mixing ratio ($CaO:SiO_2$) of 1:1 (mass ratio of solid content), was used for (B) starting material liquid for hydrothermal synthesis.

For (C) surfactant, a nonionic surfactant containing polypropylene glycol for hydrophobic group and ethylene oxide polymer block for hydrophilic head at an ethylene oxide content of 40 % by mass based on the molecular weight

of the surfactant was used. Glass fiber having an average fiber diameter of 13 μm and average fiber length of 6 mm, and silica fiber and/or pulp fiber were used for (D) reinforcing fiber.

The above-mentioned components (A) to (D) were blended at a content ratio shown in Table 1, to prepare heat insulating composition Nos. 1 to 8. The preparation of the compositions was conducted as follows: a predetermined amount of surfactant and fibers were added to the starting material liquid for calcium silicate hydrate, and thereafter, the silica aerogel was added to the mixture little by little. The content of starting material liquid for calcium silicate is indicated as the solid content, i.e. the content of the starting material for calcium silicate in Table 1.

Thus prepared compositions were charged to a mold having a water draining opening to obtain a primary shaped article, and the obtained primary shaped article was heated to 180 °C for 4 hours under the pressure of 10.5 atm in autoclave. The primary shaped article after the heating and pressing treatment was left at rest in a drying apparatus at 180 °C for 10 hours to obtain a plate-like heat insulator having a thickness of 20 to 30 mm.

The thermal conductivity (mW/m·K) at 25 °C of the resulting plate-like heat insulator was measured with HC-074 sold by EKO INSTRUMENTS Co., Ltd.. The measurement results were represented as "thermal conductivity 1" in Table 1. After the measurement, the plate-like heat insulator was fired at 650 °C for 2 hours. After firing and cooling to room temperature, the heat insulator was measured for flexural strength (N/$cm^2$) according to JIS A9510. The measurement results were evaluated based on the four criteria from "◎" to "×" indicated below. Furthermore, thermal conductivity (mW/m·K) ("thermal conductivity 2") was measured with respect to the heat insulator Nos. 1-3 after fired and cooled to room temperature. The evaluation results were shown in Table 1.

◎ N/$cm^2$ or more
○: 5 to 7 N/$cm^2$
Δ: 3 to 5 N/$cm^2$
×: less than to 3 N/$cm^2$

Heat insulating composition No. 9:

The heat insulating composition No. 9 was prepared in the same manner as the composition No. 1 except that silica aerogel A' without crushing was used instead of silica aerogel A. The prepared composition No. 9 was evaluated with respect to thermal conductivity before firing (i.e. thermal conductivity 1) and flexural strength in the same manner as No.1. The results are shown in Table 1.

Reference Example 1:

Calcium silicate board available on the market (Reference Example 1) was evaluated in the same manner as No.1, and the evaluation result is shown in Table 1.

[Table 1]

| No. | | 1 | 2 | 3 | 4 | 5 | 6 | 7 | 8 | 9 | Reference Example 1 |
|---|---|---|---|---|---|---|---|---|---|---|---|
| composition | (B) starting material for hydrothermal synthesis | 10 | 10 | 10 | 10 | 10 | 10 | 10 | 10 | 10 | 10 |
| | (A) silica aerogel A | 15 | 23 | 40 | 40 | 40 | 40 | 90 | 15 | - | — |
| | (A) silica aerogel A' | — | — | — | — | — | — | — | — | 15 | — |
| | (D) reinforcing fiber | 0.47 | 0.47 | 0.47 | 0.97 | 1.47 | 1.97 | 2.47 | 0.47 | 0.47 | 0.47 |
| | (C) surfactant | 0.6 | 0.92 | 0.16 | 0.16 | 0.16 | 4.0 | 0.36 | 0 | 0.6 | — |
| content ratio | A:B | 6:4 | 7:3 | 8:2 | 8:2 | 8:2 | 8:2 | 9:1 | 6:4 | 6:4 | — |
| | C/A × 100 (%) | 4 | 4 | 0.4 | 0.4 | 0.4 | 10 | 4.3 | 0 | 4 | — |
| | D/(A + B) × 100 (%) | 1.9 | 1.4 | 0.9 | 1.9 | 2.9 | 3.9 | 5.0 | 1.9 | 1.9 | — |
| moldability of composition | | molded | molded | molded | molded | molded | molded | no molded | no prepared | molded | — |
| heat insulator | thermal conductivity 1 (mW/mK)*1 | 24 to 25 | 22 to 23 | 20 | 20 | 20 | 20 | — | — | 24 | 45 |
| | thermal conductivity 2 (mW/mK)*2 | 28 | 25 | 22 | — | — | — | — | — | — | - |
| | strength ($N/cm^2$) | ○ | △ | × | ○ | ◎ | ○ | — | — | × | ◎ |

*1: before firing

*2: after firing at 650 °C for 2 hours

With respect to No. 8, where silica aerogel powder was added to the aqueous solution of calcium silicate in the absence of a surfactant, the composition could not be prepared due to the separation of silica aerogel powder from the aqueous solution of calcium silicate.

Since the preparations of No. 1 to No. 6 were conducted in the presence of surfactant, the moldable compositions Nos. 1 to 6 were obtained. Nos. 2 and 3, where the content of reinforcing fiber to the total amounts of silica aerogel and calcium silicate is relatively low, gave a molded article free from destruction, but not having a sufficient strength.

From the comparison between No. 3 and No. 4, it can be seen that the increased content of reinforcing fiber can improve the strength of the molded article, regardless that the contents of the surfactant per silica aerogel are equal to each other. It is possible to attain to the strength almost equal to that of calcium silicate board (Reference Example 1) by adjusting the content of reinforcing fiber.

From the comparison between Nos. 1 to 3, it is understood that the more the content of silica aerogel in the mixing ratio of calcium silicate and silica aerogel is, the smaller the thermal conductivity is, and the heat insulating property become better. Accordingly, the necessary heat insulating property can be attained by increasing the content of the silica aerogel. However, since the content of calcium silicate is decreased inversely with the content of the silica aerogel, the undue high content of the silica aerogel resulted in difficulty to produce a moldable composition even if the content of the reinforcing fiber is increased (see No. 7). From these results, it is supposed that calcium silicate hydrate can act as a binder in the heat insulator.

Further, the comparison between No. 1 and No. 9, it is understood that the smaller particle diameter of the silica aerogel is, the more excellent in the strength the heat insulator is provided.

From the results of thermal conductivities before and after firing (i.e. thermal conductivities 1 and 2) in Nos. 1 to 3, it can be seen that the heat insulator has a thermal conductivity after firing of 28 mW/m·K or less, which is almost equal to one before firing. Accordingly, these heat insulators retain more excellent heat insulating property, comparing to the calcium silicate board.

[Preparation and evaluation of heat insulator Nos. 11-18 containing infrared interacting agent]

For (E) infrared interacting agent, any one of silicon carbide (SiC:E1), titanium oxide (TiO:E2), and carbon black (CB:E3), or a combination of two or more of them are used. The same materials as those used for No. 1 were employed for (A) silica aerogel, (B) starting material liquid for calcium silicate hydrate, (C) surfactant, and (D) reinforcing fiber respectively.

Heat insulating compositions Nos. 11 to 18 were prepared by mixing components (A) through (E) in the respective amounts (parts by mass) as shown in Table 2 according to the following manners. The predetermined amounts of surfactant, reinforcing fiber, and infrared interacting agent were added to the starting material liquid for calcium silicate hydrate, and thereafter the above-mentioned silica aerogel was added little by little to obtain the compositions. For comparison, heat insulating composition No. 10 without infrared interacting agent was prepared. The mass content ratio of (A) silica aerogel and (B) starting material for calcium silicate, i.e. A:B, is 8:2 in all of the prepared heat insulating compositions Nos. 10 to 18. In addition, the ratio of the content of reinforcing fiber to the total content of silica aerogel and starting material for calcium silicate, i.e. D/(A+B), is 8 % by mass in all the compositions Nos. 10 to 18.

Plate-like heat insulators each having the thickness of 23 mm were made using the prepared heat insulating composition Nos. 10 to 18 in the same manner as No. 1. An electron micrograph of the heat insulator No. 10 was taken, and the obtained photograph was shown as Fig. 4.

In Fig. 4, an aggregate of silica aerogel particles indicated as "A", and acicular or fibrous crystal of calcium silicate hydrate formed via hydrothermal reaction indicated as "B", are recognized. The acicular or fibrous crystal may be identified as a xonotlite crystal of calcium silicate hydrate from the view of the size. The formed xonotlite crystals are intertwined each other and exist at gaps between silica aerogel particles. Accordingly, the formed xonotlite crystals are supposed to act as a binder.

The strength of the plate-like heat insulator Nos. 10 to 18 obtained using the respective compositions was measured and evaluated in the same manner as No. 1. Furthermore, thermal insulation performance was measured as shown in Fig.5. The obtained heat insulator 13 was placed on the heater 12 set on the ceramic board 11 having the thickness of 150 mm (IBIDEN CO., LTD.). Four side walls of the heater 12 and the heat insulator 13 were surrounded by the ceramic boards 14 (IBIDEN CO., LTD.) and heat insulated. Under the heat insulated condition, the heater 12 was heated up to 700 °C. The thermocouple was inserted in the heat insulator 13 at the portion of 1 mm from the upper surface. The temperature reached to constant was measured as the temperature ($T_1$). The thermal insulation performance was calculated using the following formula. The higher the temperature difference between the $T_1$ and the heater is, the more excellent the thermal insulation performance is. The measurement results are shown in Table 2.

$$\text{Thermal insulation performance} = 700 - T_1$$

[Table 2]

| | No. | 10 | 11 | 12 | 13 | 14 | 15 | 16 | 17 | 18 |
|---|---|---|---|---|---|---|---|---|---|---|
| composition(parts) | (A) silica aerogel | 40 | 36 | 32 | 26.8 | 20 | 32 | 26.8 | 32 | 26.8 |
| | (B) starting material for hydrothermal synthesis | 10 | 9 | 8 | 6.7 | 5 | 8 | 6.7 | 8 | 6.7 |
| | (C) surfactant | 0.16 | 0.14 | 0.13 | 0.11 | 0.08 | 0.13 | 0.11 | 0.13 | 0.11 |
| | (D) reinforcing fiber | 4.0 | 3.6 | 3.2 | 2.68 | 2.0 | 3.2 | 2.68 | 3.2 | 2.68 |
| | (E1) infrared interacting agent SiC | 0 | 5.42 | 10.83 | 17.87 | 27.08 | 0 | 0 | 0 | 0 |
| | (E2) infrared interacting agent TiO | 0 | 0 | 0 | 0 | | 10.83 | 17.87 | 0 | 8.94 |
| | (E3) infrared interacting agent CB | 0 | 0 | 0 | 0 | 0 | 0 | 0 | 10.83 | 8.94 |
| content ratio | A/(A + B) (%) | 80 | 80 | 80 | 80 | 80 | 80 | 80 | 80 | 80 |
| | content of infrared interacting agent(%) (E1 + E2 + E3)/ (A+B+C+D+E1+E2+E3) | 0 | 10 | 20 | 33 | 50 | 20 | 33 | 20 | 33 |
| heat insulator | thermal insulation performance (700 - T1) (°C) | 512 | 570 | 586 | 598 | 570 | 590 | 575 | 560 | 588 |
| | strength (N/cm²) | ○ | ○ | ○ | ◎ | ◎ | ○ | ◎ | ○ | ○ |

As seen from Table 2, the thermal insulation performance of the heat insulating composition Nos. 11-18 containing the infrared interacting agent was increased by about 50 °C or more, comparing to the heat insulating composition

No. 10 without infrared interacting agent. In addition, in the case of employing ceramic particle for the infrared interacting agent, the strength was also increased (Nos. 13, 14, and 16).

[Production and evaluation of multilayered heat insulator]

Plate-shaped heat insulator (thickness: 20mm) p1 and p2 were made using a heat insulating composition No. 13 containing infrared interacting agent, and heat insulating composition No. 10 without infrared interacting agent respectively. The plate-shaped heat insulator p1 or p2 was laminated in order indicated by Table 3 to prepare a three layered heat insulator L1 and L2. Each of the heat insulators L1 and L2 has a three-layer structure consisting of 13a, 13b, and 13c, and has a thickness of 60 mm. The heat insulator L1 or L2 was placed on the heater 12 set on the heat insulating board 11 having a thickness of 150 mm available from IBIDEN CO., LTD., as shown in Fig. 6. And four side-walls of the heater 12 and heat insulator 13 were surrounded with heat insulating boards 14 available from IBIDEN CO., LTD.

The multilayered heat insulators L1 and L2 were heated by the heater set at 650 °C and the temperatures ($T_2$) on the top surface of the heat insulators L1 and L2 under heating condition by the heater 12. Additionally, heat insulating board 16 (thickness: 25 mm) available from Porextherm was placed on each third layer 13c of the multilayered heat insulator for insulating against room temperature in atmosphere, and the temperature ($T_3$) at the point between the third layer 13c and the board 16 was measured. The measurement results were shown in Table 3.

[Table 3]

| multilayered heat insulator | | L1 | L2 |
|---|---|---|---|
| layer structure | first layer (13a) | p1 | p1 |
| | second layer (13b) | p1 | p1 |
| | third layer (13c) | p1 | p2 |
| heat insulator performance (°C) | temperature at the room temperature side ($T_2$) | 75 | 70 |
| | temperature at the position contacting with heat insulating board ($T_3$) | 405 | 430 |

The temperature $T_2$ at the room temperature side was compared between L1 and L2. L1 consists of the layers of plate-shaped heat insulator p1 containing infrared interacting agent. L2 has the layer p1 at the heat source side and the layer of plate-shaped heat insulator p2 without infrared interacting agent at the room temperature side. L2 was lower than L1 with respect to the temperature $T_2$, which means L2 was superior to L1 in heat insulating property. On the other hand, in the case of insulating from outer atmosphere (room temperature) with the heat insulating board 16, the heat insulator L1 was lower than L2 with respect to the temperature $T_3$ at the point contacted with the heat insulating board 16.

From these results, it is understood, in the case of a multilayered heat insulator as a combination of a heat insulating layer containing infrared interacting agent and a heat insulating layer without infrared interacting agent, that a more improved thermal insulation performance may be achieved by setting the layer containing infrared interacting agent at the heat source side.

## INDUSTRIAL APPLICABILITY

The heat insulating composition of the invention is moldable and useful because the heat insulating composition can provide a heat insulator applicable for various shaped thermal equipments. The shaped heat insulator of the invention is lightweight, and has high heat insulating property, excellent heat resistance and fire resistance. Therefore, the shaped heat insulator is useful for a heat insulator for a thermal equipment exposed to a high temperature condition such as a reformer used for fuel cell.

## DESCRIPTION OF THE REFERENCE NUMERALS

1 mold
2,2' cavity
3,3' draining mesh
4,5 pressing body

10 heat insulating composition

## Claims

1. A moldable heat insulating composition comprising

   (A) silica aerogel having a porosity of 60 % or more;
   (B) starting material liquid for forming a ceramic crystal via hydrothermal reaction (hereinafter referred to as "starting material liquid for hydrothermal synthesis");
   (C) surfactant; and
   (D) reinforcing fiber.

2. The heat insulating composition according to claim 1, wherein (B) starting material liquid for hydrothermal synthesis is a starting material liquid for calcium silicate hydrate.

3. The heat insulating composition according to claim 1 or 2, wherein the content mass ratio (A:B solid content) of (A) silica aerogel having a porosity 60 % or more to the solid of (B) starting material liquid for hydrothermal synthesis is in the range of 3:7 to 8:2.

4. The heat insulating composition according to any one of claims 1 to 3, wherein (A) silica aerogel has a hydrophobic treated surface.

5. The heat insulating composition according to any one of claims 1 to 4, wherein (D) reinforcing fiber is contained at a ratio of at most 10 % by mass based on the total content of (A) silica aerogel and the solid content of (B) starting material liquid for hydrothermal synthesis.

6. The heat insulating composition according to any one of claims 1 to 5, wherein (C) surfactant is a nonionic surfactant having polyoxyethylene block for a hydrophilic head and polyoxypropylene block for hydrophobic tail.

7. The heat insulating composition according to any one of claims 1 to 6, further comprising (F) infrared interacting agent.

8. A method for manufacturing a heat insulator comprising:

   preparing a primary shaped article by charging a moldable heat insulating composition according to any one of claims 1 to 7 into a mold having a cavity with an intended shape and removing water from the charged composition; and
   heating and pressing the primary shaped article to synthesize or grow a ceramic crystal from (B) starting material liquid for hydrothermal synthesis.

9. The method according to claim 8, wherein the primary shaped article is prepared by charging the heat insulating composition to a mold having an opening for draining.

10. The method according to claim 8 or 9, wherein the ceramic crystal is acicular or fibrous crystal.

11. A shaped heat insulator by molding a heat insulating composition according to any one of claims 1 to 7 with use of a forming mold.

12. A shaped heat insulator comprising a silica aerogel having a porosity of 60 % or more, a ceramic crystal, and a reinforcing fiber.

13. A shaped heat insulator according to claim 12, wherein the ceramic crystal is acicular or fibrous crystal.

14. The shaped heat insulator according to claim 12 or 13, further comprising an infrared interacting agent.

15. The shaped heat insulator according to any one of claims 11 to 14, wherein the thermal conductivity at 600 °C is 50 mW/m·K or less.

**16.** A multilayered heat insulator comprising a first heat insulating layer consisting of the heat insulator claimed in claim 12, and a second thermal insulating layer consisting of the heat insulator claimed in claim 14.

**17.** The multilayered heat insulator according to claim 16, the multilayered heat insulator being applied to a cylindrical or prism shaped heat source,
wherein the second insulating layer is disposed on inner side to be contacted with the heat source, and the first insulating layer is disposed on outer side, when the multilayered heat insulator is applied to the cylindrical or prism shaped heat source.

[Fig. 1]

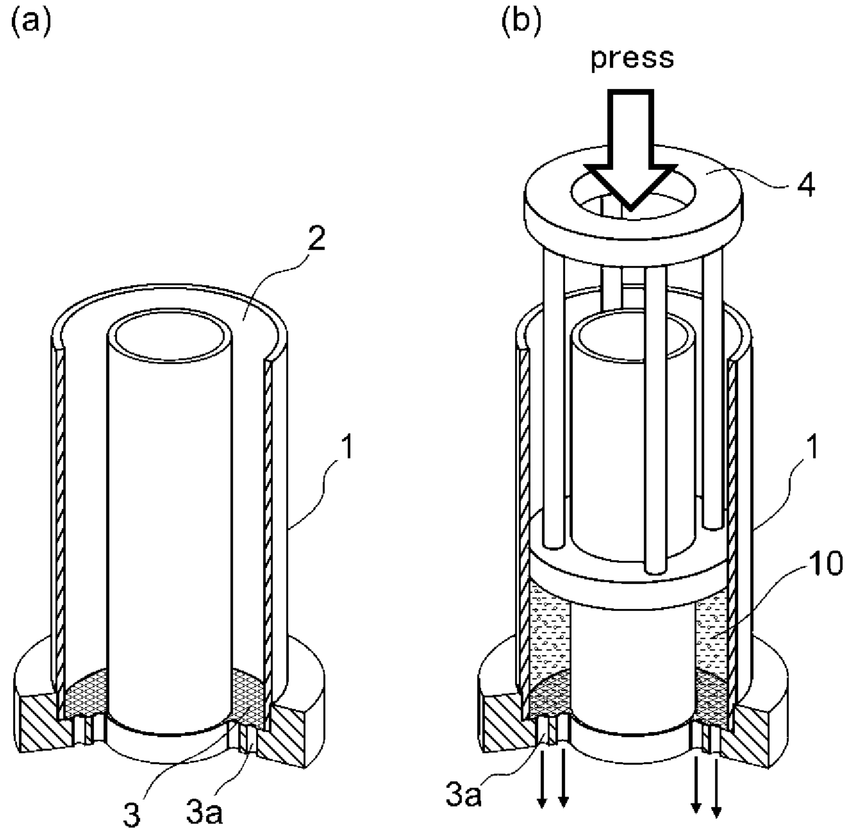

[Fig. 2]

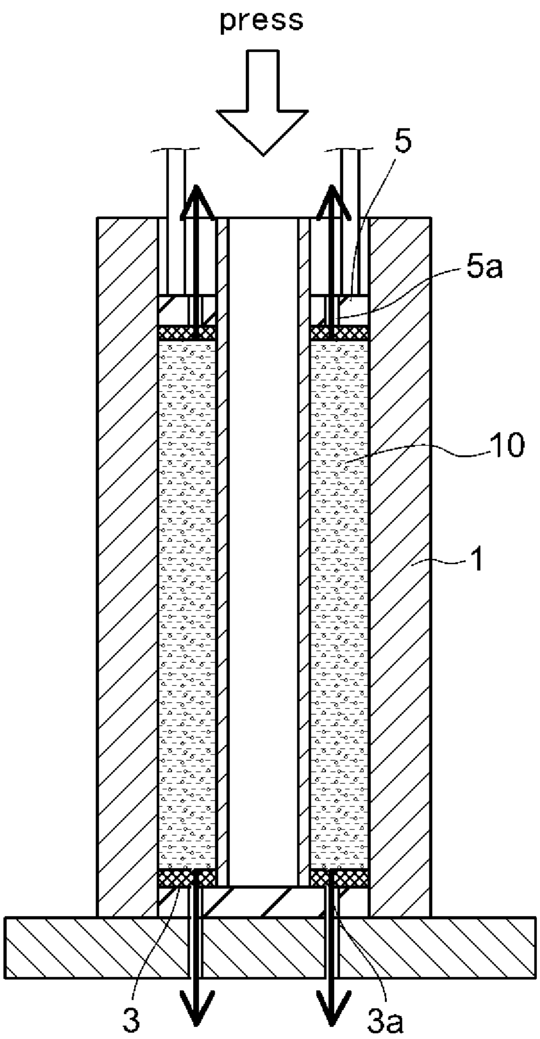

[Fig. 3]

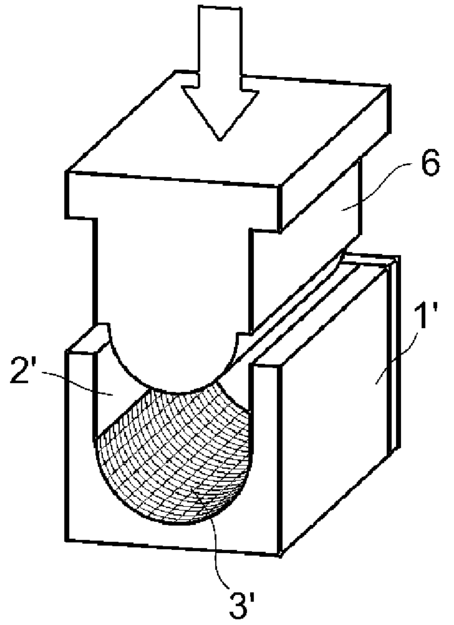


[Fig. 4]

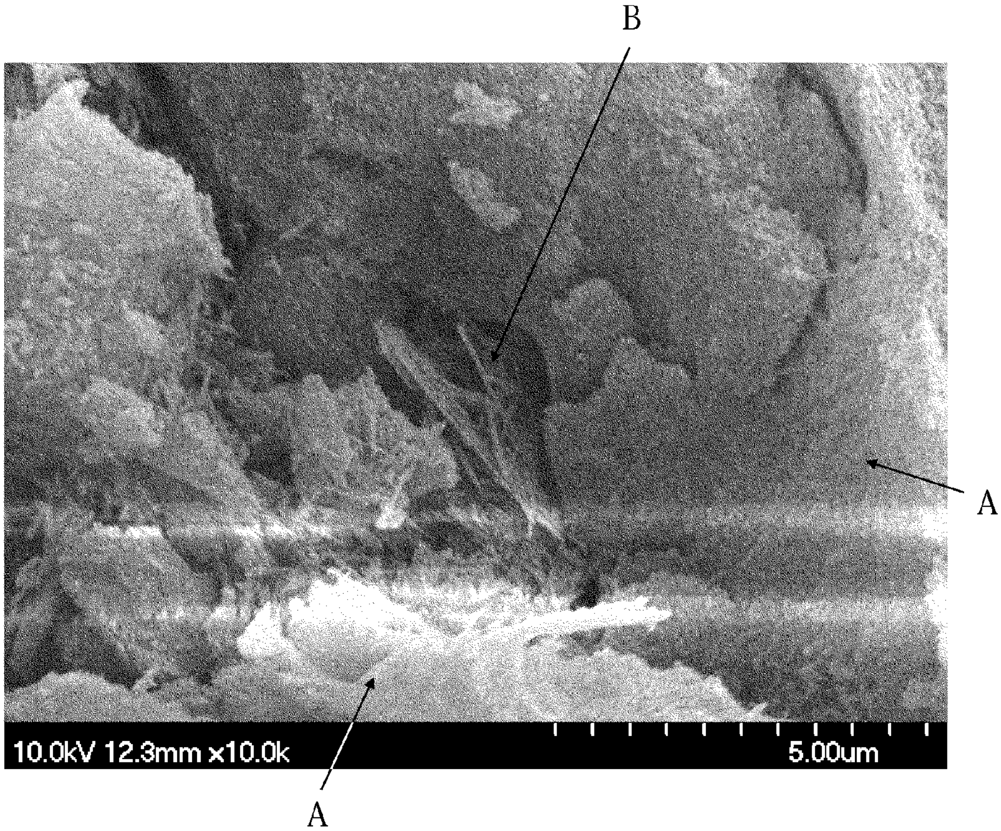

[Fig. 5]

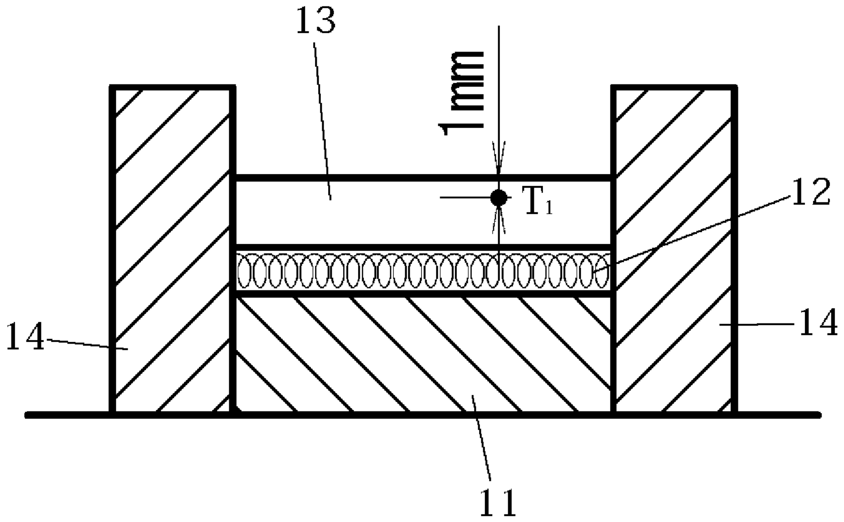


[Fig. 6]

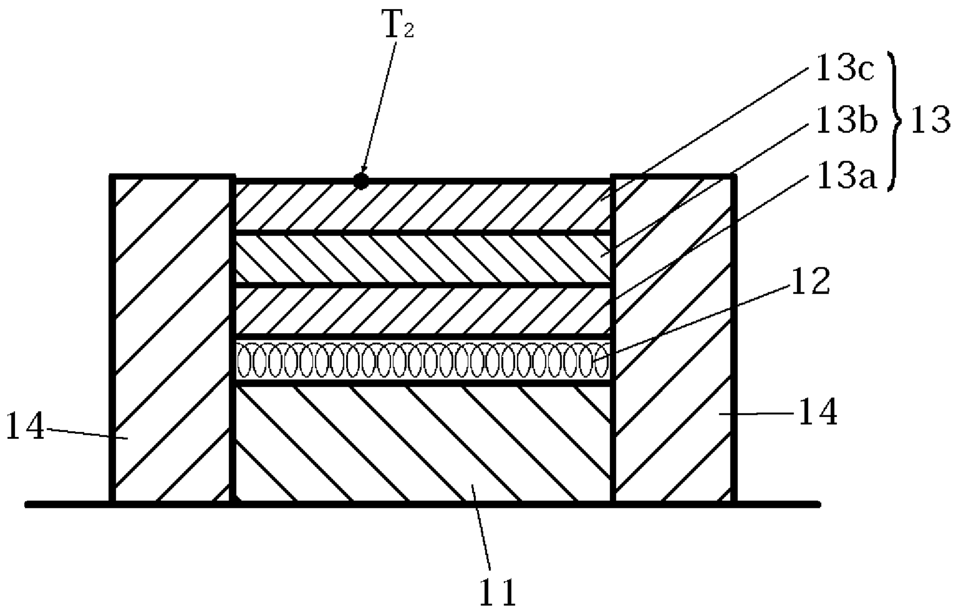

[Fig. 7]

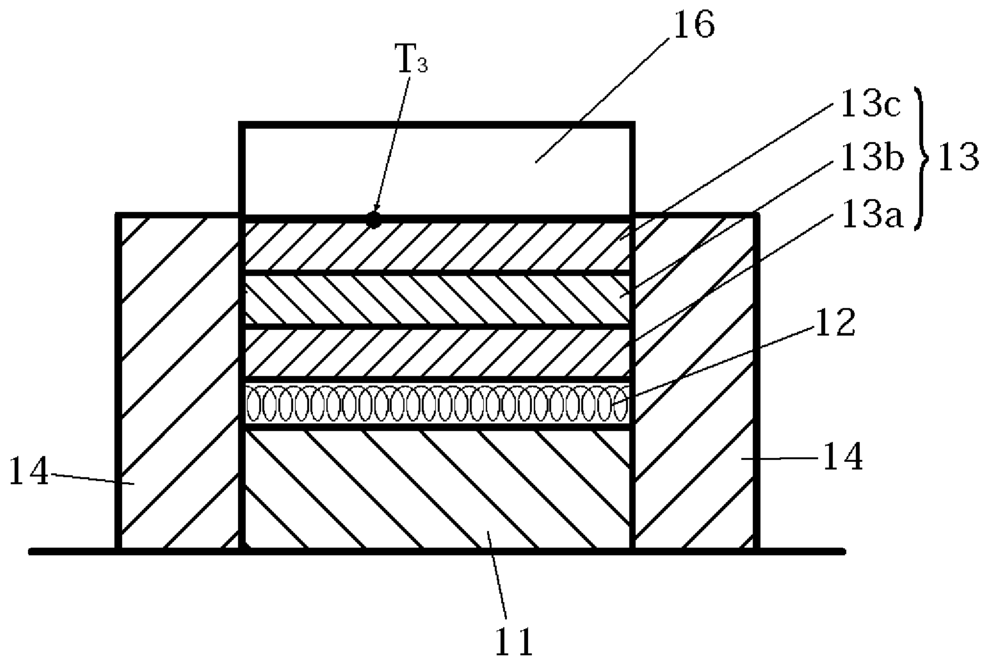

## INTERNATIONAL SEARCH REPORT

International application No.
PCT/JP2013/057591

A. CLASSIFICATION OF SUBJECT MATTER
*C04B38/08*(2006.01)i, *C04B14/04*(2006.01)i, *C04B14/38*(2006.01)i, *C04B14/42*(2006.01)i, *C04B16/02*(2006.01)i, *C04B24/32*(2006.01)i, *C04B28/18*(2006.01)i, *C04B35/80*(2006.01)i, *C04B38/00*(2006.01)i,
According to International Patent Classification (IPC) or to both national classification and IPC

B. FIELDS SEARCHED
Minimum documentation searched (classification system followed by classification symbols)
C04B38/00-38/10, C04B7/00-28/36, C04B35/80-35/83, C04B40/00-40/06, F16L59/02, C04B111/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-509941 A (Hoechst AG.), 29 September 1998 (29.09.1998), claims 1, 4, 5, 7 to 9, 11, 14; page 4, line 1 to page 17, line 7<br>& US 6083619 A & EP 793626 A<br>& WO 1996/015998 A1 | 12,14<br>1-17 |
| Y | JP 2002-533286 A (Redco N.V.), 08 October 2002 (08.10.2002), claim 1; paragraphs [0016] to [0022], [0024] to [0026], [0030], [0031]<br>& US 6936326 B1 & EP 1140728 A<br>& WO 2000/037389 A1 | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June, 2013 (03.06.13) | 11 June, 2013 (11.06.13) |
| Name and mailing address of the ISA/<br>Japanese Patent Office<br>Facsimile No. | Authorized officer<br><br>Telephone No. |

Form PCT/ISA/210 (second sheet) (July 2009)

INTERNATIONAL SEARCH REPORT

International application No. PCT/JP2013/057591

C (Continuation). DOCUMENTS CONSIDERED TO BE RELEVANT

| Category* | Citation of document, with indication, where appropriate, of the relevant passages | Relevant to claim No. |
|---|---|---|
| Y | JP 58-49654 A (Nippon Sanso Corp.), 23 March 1983 (23.03.1983), claims; page 2, upper left column, line 11 to page 2, lower right column, line 5; page 3, examples (Family: none) | 1-11 |
| Y | JP 2003-179011 A (Asahi Kasei Corp.), 27 June 2003 (27.06.2003), paragraphs [0020], [0021] & TW 567551 B | 6 |
| P,A | JP 2012-131684 A (Japan Insulation Co., Ltd.), 12 July 2012 (12.07.2012), claims 1 to 6; paragraph [0014] (Family: none) | 1-17 |

Form PCT/ISA/210 (continuation of second sheet) (July 2009)

INTERNATIONAL SEARCH REPORT

International application No.
PCT/JP2013/057591

Continuation of A. CLASSIFICATION OF SUBJECT MATTER
(International Patent Classification (IPC))

*F16L59/02*(2006.01)i, *C04B111/28*(2006.01)n

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009299893 A
- JP 4361602 B